# EUROPEAN PATENT SPECIFICATION

(11) **EP 3 832 151 B1**
(45) Date of publication and mention of the grant of the patent: **13.08.2025**
(21) Application number: 19213213.2
(22) Date of filing: 03.12.2019
(51) Int. Cl.: F16B 31/02, F16B 13/14, F16B 13/00

(54) **AN INDICATOR ASSEMBLY FOR AN ANCHOR**
INDIKATORANORDNUNG FÜR EINEN ANKER
ENSEMBLE INDICATEUR POUR ANCRAGE

(43) Date of publication of application: 09.06.2021
(73) Proprietor: Illinois Tool Works, Inc., Glenview, Illinois 60025 (US)
(72) Inventor: SIMONIN, Jean-Luc, Illinois, 60025 (US); COUVREUR, Jerome, Illinois, 60025 (US)
(74) Representative: HGF

(56) References cited:
- EP-A1- 1 353 080
- EP-A1- 3 346 145
- EP-A1- 3 346 147
- EP-B1- 1 353 080
- WO-A1-2017/058451
- DE-A1- 2 418 598
- US-A- 4 122 753

## Description

The present invention relates to fasteners and anchors for fastening components to a support material in general, and an indicator assembly for an anchor, such as a chemical anchor, in particular.

### Introduction

A chemical anchor is an anchor that is mechanically fixed to a support material with the aid of a resin and a hardener or activator for polymerizing the resin.

At present there exist chemical anchors for solid materials and chemical anchors for hollow materials.

In the case of a solid material, a hole may be drilled a capsule of resin slid into it containing a capillary tube filled with hardener, before crushing the combination and mixing the two components. It is also possible to drill a hole and to inject into it resin and a polymerization hardener or activator that mix inside it. A stud or a screw may serve as fastening element.

In the case of a hollow material, after drilling a hole in the wall of the material, a tubular screen may be inserted into it, after which resin and a hardener are injected, the resin expelled from the screen, once polymerized, fastening the screen to the rear of the wall. Stud and screw may also be used as fastening elements.

For a hollow material, there is also known an element including a bearing flange to which is attached a split skirt, the skirt being adapted i) to be pulled against the rear face of the wall by the link connecting it to the flange bearing against the front face of the wall and ii) to receive by injection a mixture of resin and hardener to fasten the element to the rear of the wall.

The prior art notably includes the document WO2017/058451.

With many chemical anchors, it is necessary to inject resin while in WO2017/058451 the applicant has sought to circumvent this relatively laborious injection. Thus, a chemical anchor is proposed that can not only adapt equally well to a hollow material and to a solid material but whose fastening is no longer purely chemical but also mechanical.

A chemical anchor from publication WO2017/058451 is shown here in Figures 1 (a) and (b). The anchor 10 includes a tubular sheath 12 with a longitudinal axis 14, wherein the sheath 12 extends between a first end including bearing means 16, which are formed by an annular bearing flange, and a second end 18 opposite the flange 16.

A piston member 20 is housed in the sheath 12 at the level of its second end 18. A screw 22 is intended to be engaged in the anchor 10 and to be screwed into the member 20 in order to cause it to move longitudinally inside the sheath 12. The latter may comprise means for longitudinally guiding the member 20.

In the example represented, the sheath 12 comprises two adjacent longitudinal portions: a first portion 12a including the second end 18 and a second portion 12b including the bearing means 16. Here the first portion 12a is formed by a cylindrical envelope that is solid or not perforated, unlike the second portion 12b which is perforated and has slots 24 passing through it in the radial direction relative to the longitudinal axis 14 of the anchor and the sheath. The second portion 12b may be covered by an external envelope made of a relatively flexible and deformable material, preferably one that can be torn by traction and/or compression.

The openings 24 have a two-fold function. On the one hand they allow polymerizable resin to pass from the interior of the sheath 12 to the exterior. They may further allow longitudinal compression or deformation of the second portion 12b of the sheath.

The second portion 12b defines a cylindrical internal cavity 26 that is empty. The first portion 12a defines a cylindrical internal cavity 28 containing the polymerizable resin.

In known manner, the resin may be a single-component resin or a two-component resin. It may therefore comprise either a single resin component 30 intended to polymerize in contact with air or moisture, for example, or a resin component 30a and a hardener component 30b intended to be mixed.

When the resin comprises a single component, that component may be housed in a capsule 32 located in the aforementioned first portion 12a of the sheath 12. This capsule 32 is preferably made from a material that can be torn or broken, for example glass. It is preferably substantially cylindrical and centred on the longitudinal axis 14 of the anchor.

The anchor 10 further comprises a sleeve 36 mounted on the sheath 12 at a distance from its longitudinal ends. In the example represented, the sleeve 36 has an annular shape and the sheath passes through it. In longitudinal section it has a substantially frustoconical shape the larger base of which is located on the same side as the bearing means 16 of the anchor. The sleeve 36 may be made of foam. It may comprise cells and have a spongy structure.

The anchor 10 further comprises stop means 38 intended to cooperate with the member 20 to limit its longitudinal travel inside the sheath 12. In the example represented, these stop means 38 are formed at the level of or by the sleeve 36 and in particular at the level of or by the smaller diameter end of the sleeve. Here one of the functions of the sleeve is therefore to limit the travel of the member 20 in the sheath 12 when screwing in the screw 22. Alternatively, the stop means could be carried by the sheath 12.

The other functions of the sleeve 36 depend on the use that is made of the chemical anchor 10. In the situation represented in which the anchor is used in a hollow support material, the sleeve 36 is intended to be impregnated with resin. After hardening of the resin, the sleeve bears axially on an internal face of a wall of the support material to improve the anchoring of the anchor in the support material.

In the situation represented in which the anchor is used in a solid material, the sleeve is intended to be compressed radially so as not to impede the introduction of the anchor into the support material.

In both cases, the user who is screwing in the screw 22 can then feel that the screwing torque increases because of the resistance associated with the piston member 20 bearing on the sleeve. In this position, the resin has filled a sufficient volume in the sheath (the aforementioned empty cavity) and is in contact with the cylindrical internal surface of the hole, which anchors the anchor in the support material. In this case it is therefore not necessary or even possible to screw the screw in further to compress the anchor longitudinally.

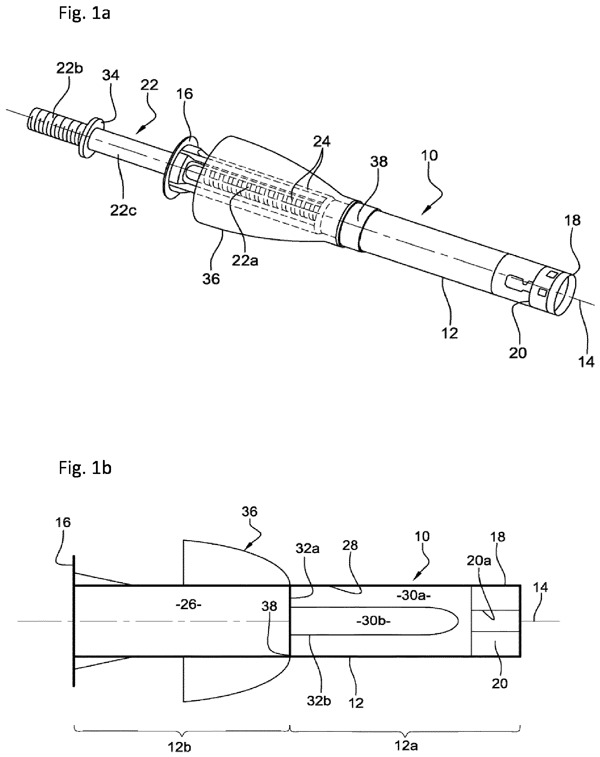

However, while the anchor 10 of Figures 1(a) and (b) provides improvements over other designs, it is nevertheless problematic because the user cannot observe the multiple stages of the fixing operation. In particular, it is not intuitive for users to complete the screwing because they have to continue rotating the screw without being able to see any of the fixing operation in action. Furthermore, the end point for the user to stop screwing is indefinite and approximate as any change in the screwing torque, which may be due to varying resistance caused by the different stages of the fixing operation, can make the user assume fixing is complete. Accordingly, there is no guarantee of setting the anchor correctly first time, leading to a lack of reliability of the anchor.

Furthermore, document US4,122,753 describes an expansion anchor assembly including, for example, a spacer sleeve and a serially arranged distance sleeve with a washer positioned on the spacer sleeve end between the distance sleeve end and an annular collar of the spacer sleeve. Here, when tightening the bolt, the head pushes the spacer sleeve through the washer so that the projection collar is either deformed or sheared off and the spacer sleeve is driven into the interior of the distance sleeve.

Therefore, it is an object of the present invention to provide an indicator assembly for an anchor that is simple, effective and economical.

### Summary of the Invention

According to a first aspect of the invention, there is provided an indicator assembly for an anchor, comprising:
a guide member, having a distal end portion, operably coupleable to an opening of a sheath of the anchor, and a proximal end portion, configured to guidingly receive a screw entering the opening of the sheath, said guide member being adapted to centralise the screw with a central axis of the sheath during use;
an indicator member, operably frangibly coupled to said proximal end portion of said guide member, and configured to operably engage with a shoulder portion of the screw, so as to, physically detach from said guide member at a predetermined force provided by the shoulder portion of the screw onto said indicator member during use, wherein said indicator member may comprise a plate member having a concentrically arranged circular aperture that is configured to matchingly receive the shoulder portion of the screw during use, and wherein said plate member is operably coupled to said proximal end portion of said guide member via at least two frangible connector elements.

In this way, the indicator assembly locates snugly with an anchor and is operably coupled such that when a screw is received into the anchor the shoulder portion can bear evenly against the assembly. Furthermore, once the fixing operation of the anchor is complete, the shoulder portion will fit flush within the anchor.

Advantageously, any one of said at least two frangible connector elements may be adapted to break at a predetermined shear force provided between said shoulder portion of the screw and said matching circular aperture of said plate member.

In this way, indicator member will only detach from the indicator assembly when the contraction force from the shoulder portion acts provides sufficient bearing pressure. Any bearing pressure provided while the screw is enabling the fixing operation will leave the indictor intact until the fixing operation is complete. The separation of the indicator member from the indicator assembly will then readily provide the user with feedback that fixing operation is complete, and the anchor is safely installed.

Advantageously, said at least two frangible connector elements may protrude radially inward from said circular aperture towards said proximal end portion of said guide member. In this way, the indicator assembly has frangible connectors arranged in a space efficient way so that they sit within the indicator assembly. Furthermore, the frangible connectors are ideally positioned to engage directly with the shoulder portion of the screw, and thereby bear the shear force, so that they are broken in a reliable, predictable manner.

Advantageously, said at least two connector elements may be made from polymer.

Advantageously, said plate member may be an annular disc arranged concentric with and substantially congruent with a flange portion provided at the opening of the sheath, during use.

Advantageously, said plate member may comprise a handle portion. Thus, the indicator member can be easily removed from the anchor once it has detached from the guide member.

Advantageously, said guide member may be adapted to couplingly slide in and irreversibly attach to the sheath at the opening.

Advantageously, said guide member may comprise protrusions adapted to couplingly engage with an interior structure of the sheath.

Thus, by either irreversible attachment, or by coupling engagement, as the guide member is located into the opening of a sheath, it slides smoothly into place through guiding contact with the sheath. Once into position, the guide member fits substantially within the first end of the sheath so that it is operably engaged with a surface, recess or aperture on the inner wall of second portion of the sheath to lock the indicator assembly to the anchor. Thus, when a screw is received into the anchor, the indicator assembly cannot be accidentally drawn out of the anchor.

Advantageously, said guide member and said indicator member may be made from polymer.

Advantageously, the indicator assembly may further include at least one resilient contact portion protruding radially inwards from said distal end portion of said guide member, configured to guidingly engage with the screw, during use. Preferably, said at least one contact portion may comprise two diametrically opposed lugs configured to operably mesh with the thread of the screw, during use.

In this way, and in contrast to known systems, as the screw is received and rotated within an anchor, its tip is directed precisely towards the piston member. This occurs even as the screw travels through the resin capsule such that, when it reaches the piston member it instantly engages with its corresponding screw thread. Thus, misalignment of the screw with the piston member is prevented. With the screw correctly aligned, it is able to engage with the piston member and urge it towards the sheath in a smooth action, without interference or mis-engagement, in order to move the resin mixture.

Advantageously, said indicator member may be adapted to provide a visual contrast over the anchor. Preferably, said visual contrast may be provided by a predetermined shape and/or colour.

Advantageously, an anchor may be provided including an indicator assembly in accordance with the invention.

### Brief Description of the Drawings

Example embodiment(s) of the invention are now described, by way of example only, hereinafter with reference to the accompanying drawings, in which:
**Figure** 1shows (a) a perspective view and (b) a cross-sectional side view of a chemical anchor as known in the art;
**Figure** 2 shows (a) a perspective view, (b) a front view and (c) a side-view of an indicator assembly of the present invention;
**Figure 3** shows (a) a perspective view, (b) a cross-sectional view, and (c) a front view of the guide member of Figure 2;
**Figure 4** shows side views of the indicator assembly of Figure 2, (a) arranged to be received into an anchor, and (b) operably coupled to the anchor;
**Figure 5** shows perspective views of an indicator assembly of the invention operably engaged with a screw in the absence of other anchor components;
**Figure 6** shows a perspective view of an indicator assembly of the invention operably coupled to a sheath;
**Figure 7** shows perspective views of a screw bearing against an indicator assembly of the invention coupled to a sheath (a) before and (b)(b)-after, the indicator member has detached from the guide member;
**Figure 8** shows a sequence (a) to (h) of the fixing operation for securing an anchor to a hollow support material using an indicator member of the invention; and
**Figure 9** shows a sequence (a) to (g) of the fixing operation for securing an anchor to a hollow support material using an indicator member of the invention.

In the drawings, like reference numerals refer to like parts.

### Detailed Description

The described example embodiment relates to a chemical anchor systems as shown in Figure 1. However, the invention is not necessarily restricted to chemical anchors and may also be used with any other anchor system, chemical and mechanical.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner. Like reference numerals are used to depict like features throughout.

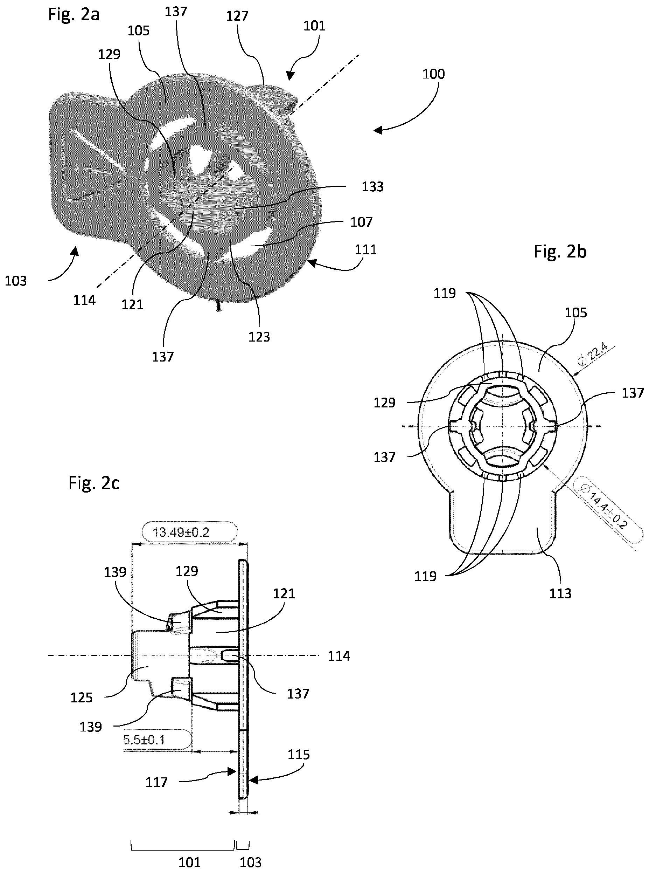

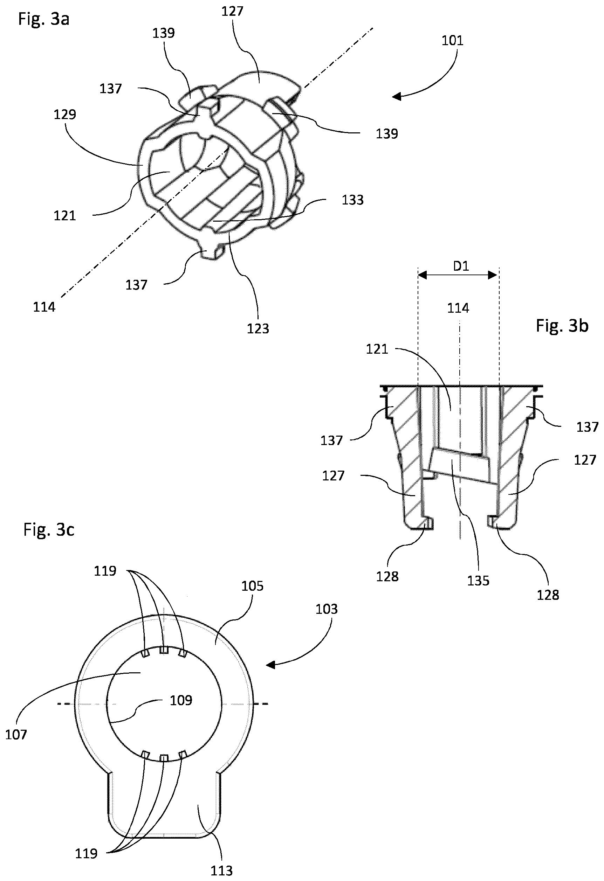

Referring now to Figures 2 and 3, the indicator assembly 100 has a longitudinal axis 114 and is provided with a guide member 101 and an indicator member 103.

The indicator member 103 includes an annular portion 105 with a central aperture 107 formed by an inner edge 109. The inner edge 109 is circular with a radius 14mm and its axis located on the longitudinal axis 114.

An outer perimeter is formed by an outer edge 111 which includes a tab or handle portion 113 extending radially outward from it. The indicator member 103 is substantially flat with a front face 115 and back face 117.

The guide member 101 is provided with a collar portion 121 with a first end 123 arranged proximal the inner edge 109 of the indicator member 103. Thus, the collar portion 121 extends in a direction away from the back face 117. At a second end 125, distal to the inner edge 109, a pair of guide arms 127 is provided which continue to extend away from the back face 117.

The collar portion 121 has a substantially cylindrical wall with a wall axis and an inner surface diameter indicated as by D1 of Figure 3(b). In this particular example, D1 is 8mm. The wall axis is with the longitudinal axis 114. The cylindrical wall is provided with a pair of expanded portions 129 in which arcuate sections of the wall have a larger diameter, such that the corresponding outer surfaces of the collar 121 are 12.8mm.

The cylindrical wall is further provided with a pair of diametrically opposed projections 137 on its outer surface. Together with the expanded portions 129, the projections 137 act to maintain the guide member 101 concentrically when the indicator assembly 100 is coupled to the opening of a sheath 12 of an anchor 10.

Furthermore, one or more of the expanded portions 129 and projections 137 operably engages with a surface on the inner wall of the internal cavity 26 of the anchor 10. In this way relative rotation of the guide member 101 with respect to the anchor may be prevented.

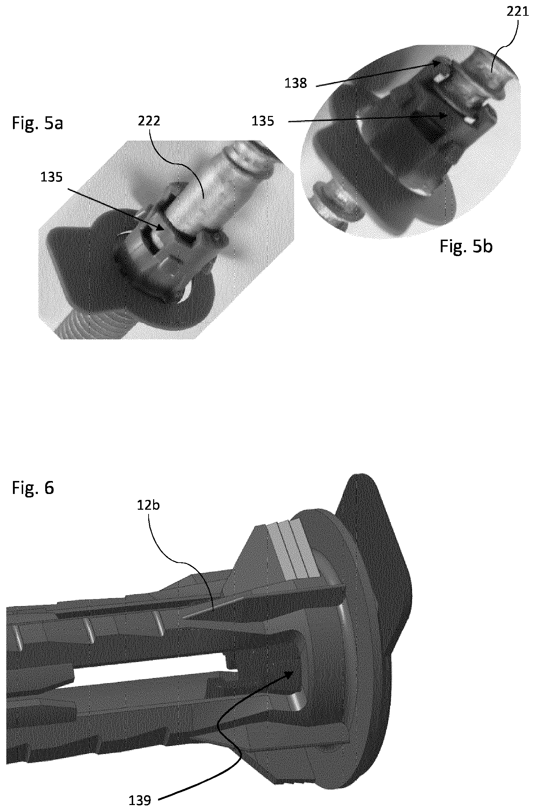

Protrusions 139 are also provided at the second end 125 of the collar portion 121, spaced apart on the outer surface of the cylindrical wall. The protrusions 139 operably engage with a surface, recess or aperture on the inner wall of second portion 12b of the sheath 12 to lock the indicator assembly 100 to the anchor 10 (see Figure 6). Thus, when a screw 22 is received into the anchor 10 the indicator assembly 100 cannot be accidentally drawn out of the anchor 10.

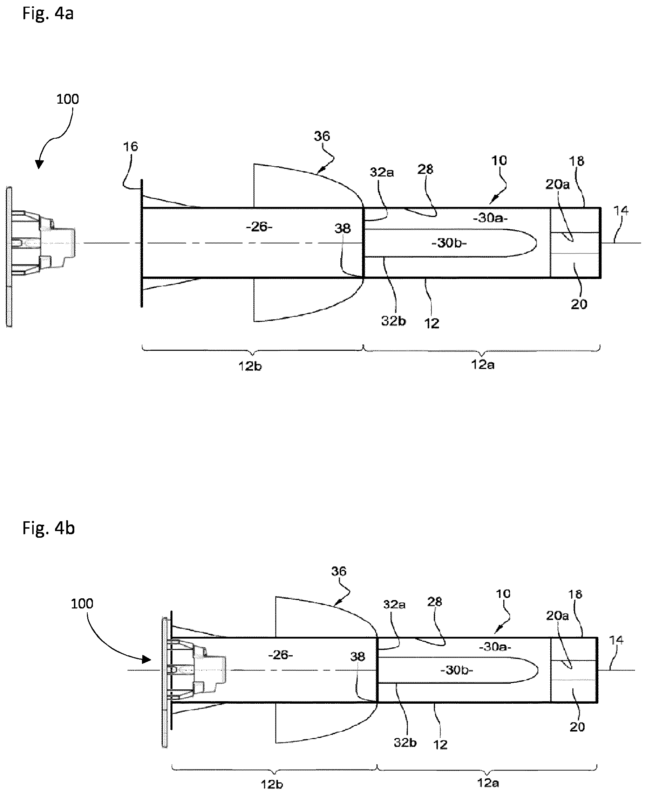

In this way, as the guide member 101 is located into the opening of a sheath 12 (see Figure 4), it slides smoothly into place through guiding contact initially between the sheath 12 and first the protrusions 139, followed by the projections 137 and expanded portions 129. Once into position, the guide member 101 fits substantially within the first end of the sheath with its longitudinal axis 114 lying along the longitudinal axis 14 of the anchor.

Also provided on the collar portion 121 are a pair of inwardly projecting ribs 133 (see Figure 3(a)) which extend axially along the inner surface of the cylinder. The ribs 133 extend away from its first end 123 and continue onto the inner surface of the guide arms 127.

The guide arms 127 are arranged to be diametrically opposed around the longitudinal axis 114. The inner and outer surfaces of the guide arms 127 are continuous with the inner and outer surfaces of the cylindrical wall so that the wall thickness and curvature of the guide arms 127 generally correspond with the cylindrical wall. The guide arms 127 each terminate with an inwardly directed arcuate rib 128 that follows the general curvature of the guide arm's inner surface.

The inner surfaces of the ribs 128 are configured to form portions of a screw thread. Further, additional portions 135 of the screw thread are provided on the inner surface of the collar portion 121. Figure 5 illustrates a screw 22 engaged with the indicator assembly 100 in the absence of other features of the anchor. Together the ribs 128 and additional portions 135 are adapted to engage with the thread of the screw 22 of an anchor 10 as it is received into the guide member 101.

Both the guide arms 127 and the additional portions 135 are resilient enough that they can expand apart to accommodate screws with slightly different diameters, or to easily accommodate both the threaded portion 221 and unthreaded portions 222 of the same screw which may have different diameters.

The guide member 101 and indicator member 103 are moulded to form a single part. The inner edge 109 of the indicator member 103 includes a series of connector elements 119 (see Figure 2(b)) extending radially inwards so that they bridge from the inner edge 109 to the outer surfaces of the expanded portions 129 and the projections 137.

When used with a chemical anchor 10, as shown in Figure 1, the indicator assembly 100 is operably coupled to the opening of the sheath 12 as described above and also shown in Figure 5. The guide member 101 is substantially surrounded by the second portion of the sheath 12b so that the guide arms 127 extend away from the flange 16. In contrast, the back face 117 of the indicator member 103 engages with the flange 16 and remains outside the sheath 12. Further, once the indicator assembly 100 is operably coupled into the sheath 12 of the anchor 10, the protrusions 139 of the indicator assembly 100 operably engage with a surface, a recess or an aperture on the inner wall of the internal cavity 26 of the sheath 12 so as to fixingly lock the indicator assembly 100 to the anchor 10.

The screw 22 includes a shoulder portion 34, also known as a cylindrical bearing shoulder, that is configured to cooperate with the indicator member 103. The shoulder portion 34 is sized so as to fit snugly within the aperture 107 defined by the inner edge 109. In other words, the diameter of the inner edge 109 is sufficiently larger than the outer diameter D2 of the shoulder portion 34.

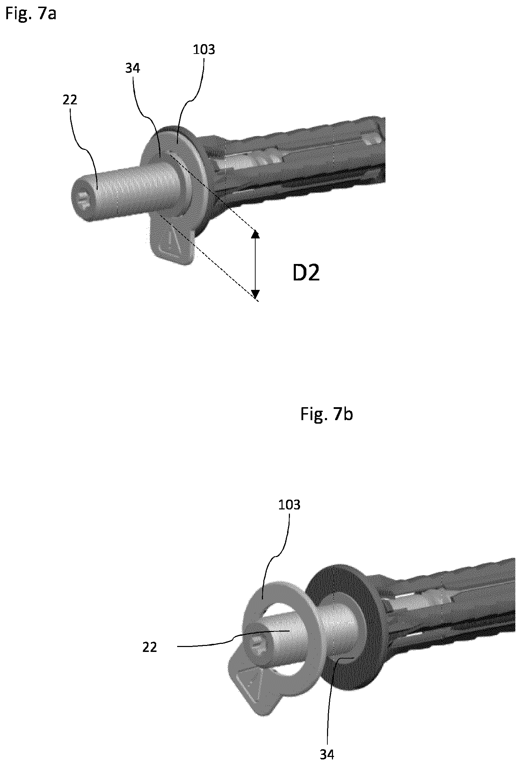

However, when the screw 22 first contacts the indicator assembly 100, the shoulder portion 34 is prevented from being received into the inner edge 109 by the connector elements 119 (see Figure 7 (a)).

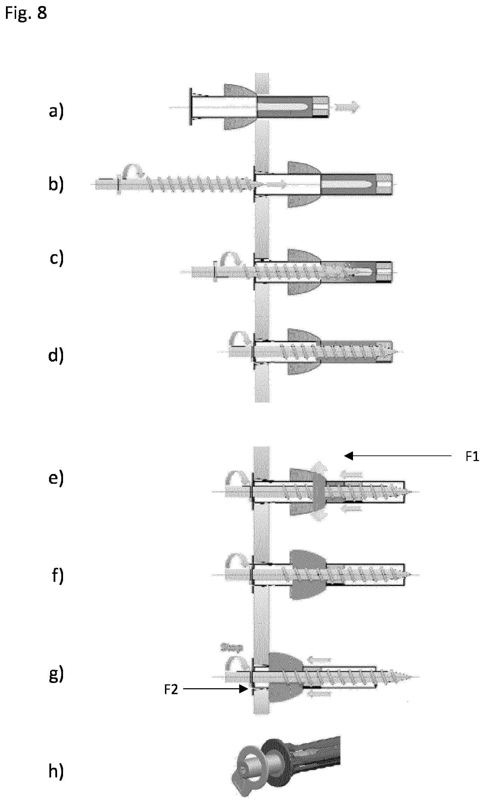

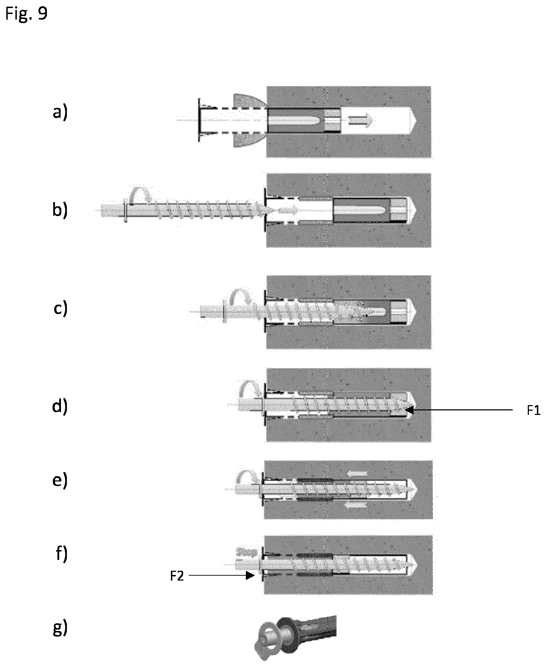

The screw 22 is introduced into the sheath 12 in the known manner in order to engage the capsule 32 and piston member 20. However, in contrast to the known fixing operation, the method proceeds differently with the indicator assembly 100 of the invention coupled to the anchor 10. Two examples of the fixing operation are described below with reference to the sequences shown in Figures 8 and 9.

In both modes of operation, the anchor 10 is introduced into a hole in a support material (see Figures 8(a) and 9(a)). The indicator assembly 100 and anchor 10 may already be coupled at this point, or the indicator assembly 100 may be introduced into and coupled to the anchor only after the anchor has been introduced into the hole.

As the screw 22 is introduced (i.e. screwed in), the ribs 128 and additional portions 135 of the indicator assembly 100 guide and axially centre the screw 22 so that it is received along the anchor axis 14 (see Figures 8(b) and 9(b)). The threaded surface of the screw 22 engages and cooperates with the guide member 101 through the thread provided by the additional portions 135 and ribs 128.

Thereafter, rotation of the screw 22 enables it to move longitudinally along axis 14. In this way, and in contrast to known systems, as the screw 22 is rotated its tip 22a is directed precisely towards the piston member 20. This occurs even as the screw 22 travels through the resin capsule 30 (see Figures 8(c) and 9(c)) such that, when it reaches the piston member 20 it instantly engages with its corresponding screw thread (see Figures 8(d) and 9(d)). Thus, misalignment of the screw 22 with the piston member 20 is prevented.

With the screw 22 correctly aligned, screw 22 is able to engage with the piston member 20 and urge it towards the sheath 12 in a smooth action, without interference or mis-engagement, in order to move the resin mixture.

Thus, as shown in Figure 8(e), when the anchor 10 is fastened to a hollow support material, the screw 22 rotates and urges the piston member 20 into the sheath, thereby mixing and expelling the resin into the sleeve 36 as described above. In this configuration, the contracting force provided by the screw 22, i.e. the force acting to urge the piston member 20, causes the shoulder portion 34 to bear against the connector elements 119, while at the same time moving the piston member 20 as shown by arrow F1.

Continued rotation of the screw 22 maintains the contracting force, expelling resin into the sleeve (see Figure 8(f)) until the piston member 20 reaches the stop means 38. Thereafter, the contracting force acts to deform the sheath 12, so that the sleeve 36 and expelled resin travel along the axis 14 towards the indicator assembly 100 until the sleeve 36 abuts the inside surface of the hollow wall (see Figure 8(g)).

With the longitudinal compression and travel of the piston member 20 thus meeting its limit at the inside surface of the hollow wall, the contraction force provided by the screw 22 now acts in the direction F2. Thus, the bearing pressure of the shoulder portion 34 against the connector elements 119 increases until, at a predetermined force, the connector elements 119 are sheared through by the shoulder portion 34.

The shearing action detaches the indicator member 103 from the guide member 101 (see Figure 8(h)). The detachment may be visually detectable by the user rotating the screw as the connector members 119 are suddenly broken allowing the indicator member to become loose and move away from the guide member 101, thereby providing visual indication that the fixing operation is complete. Additionally or alternatively, the detachment may provide an audible noise or even provide a tactile feedback to the user.

The same benefits are observed when fixing an anchor 10 to a solid support material (see Figure 9). Once the screw 22 engages the piston member 20, the shoulder portion 34 bears against the connector member 119 (see Figure 9(c)). Thus, the contracting force generated by rotation of the screw 22 acts in direction of arrow F1 and moves the piston member 20 into the sheath 12. In this way, the piston member expels resin from the sheath 12 (see Figure 9(d)).

With the anchor 10 located in a solid wall, the sleeve 36 is not free to take up a large volume of resin. However, the resin is still able to flow into the residual space between the hole in the support material and the sheath 12 (see Figure 9(e)). The piston member 20 is also still able to travel some distance towards along axis 14 towards the indicator assembly 100.

As with the fixing operation for a hollow wall, the fixing operation in a solid support material reaches a point at which the longitudinal travel of the piston member 20 is stopped (see Figure 9(f)). At this point, a significant volume of resin will surround at least the distal end of the anchor 10. With this limit reached, the contraction force again acts in the direction F2 thereby increasing the bearing pressure of the shoulder portion 34 against the connector members 119 until, at a predetermined force, they are sheared by the shoulder portion 34. The shearing action thus visually and/or audibly, and/or even tactibly, indicates that fixing operation is complete and that the indicator member 103 has detached from the guide member 101 in the same manner as described above (see Figure 9(g)).

In this way, as the screw 22 is rotated, although the user may feel varying levels of resistance at different points of the fixing operation, the prospect of stopping prematurely is reduced. Even if the screwing becomes momentarily more difficult, the user will understand that the piston member still needs to move and so the user will keep rotating the screw 22 until the indicator member 103 detaches.

Thus, the indicator assembly 100 guarantees that all steps in the fixing operation occur smoothly and consequently, that the anchor is safely installed. Any risk that the resin is inadequately expelled from the sheath or that it remains stored in the sheath and separated from the hollow or solid is avoided.

Further, the same fixing operation and indicator function is provided regardless of whether the anchor 10 is fixed to a solid or hollow wall.

Both the guide member 101 and indicator member 103 may be injection moulded from thermoplastic polymer. Suitable polymers include polyoxymethylene (POM) or polybutylene terephthalate (PBT).

In this example, both components, guide member 101 and indicator member 103, are made from the same polymer, the colour of this indicator member 103 and guide member 101 has to provide a visual contrast over the anchor. In this way, the indicator member 103, which is removed once the anchor 10 is secured in place, can be easily seen and it thereby provides a clear visual indication that it has detached from the guide member 101.

In a further example, the guide member 101 and indicator member 103 may be fabricated from different materials.

The number, dimensions and materials of the connector members 119 of the indicator assembly 100 may be adapted in many ways depending on the chemical anchor it is to be used with. Accordingly, the shear force required to detach the indicator member 103 from the guide member 101 may be changed by either providing a different number or different dimensions of the connector members 119. Alternatively or additionally, the material(s) used for the connector members 119 may be chosen so as to provide the desired breaking characteristics when subjected to the bearing pressure of the shoulder portion 34. In this way, the indicator assembly 100 can be optimised for use with different types of chemical anchors, for example, an indicator assembly 100 that is suitable for a larger anchor 10, which requires increased effort to expel resin, may need to detach at a higher breaking force. On the other hand, an indicator assembly 100 suitable for a smaller anchor 10 may need to detach at a lower breaking force.

Furthermore, the material(s) of the indicator assembly 100 may be selected so as to reduce elongation under tensile force, such as provided by the shoulder portion 34 during use. Accordingly, the connector members 119 may bear a higher bearing pressure without deforming, meaning that the indicator member 103 detaches from the guide member 101 with a 'cleaner' or more noticeable break, or with a louder noise.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. An indicator assembly (100) for an anchor (10), comprising:
a guide member (101), having a distal end portion (125), operably coupleable to an opening of a sheath (12) of the anchor, and a proximal end portion (123), configured to guidingly receive a screw (22) entering the opening of the sheath, said guide member being adapted to centralise the screw with a central axis (14) of the sheath during use;
an indicator member (103), operably frangibly coupled to said proximal end portion of said guide member, **characterized in that**, said indicator member (103) is configured to operably engage with a shoulder portion (34) of the screw, so as to physically detach from said guide member at a predetermined force provided by the shoulder portion of the screw onto said indicator member during use, wherein said indicator member comprises a plate member (105) having a concentrically arranged circular aperture (107) that is configured to matchingly receive the shoulder portion of the screw, during use, and wherein said plate member is operably coupled to said proximal end portion of said guide member via at least two frangible connector elements (119).

2. An indicator assembly according to claim 1, wherein any one of said at least two frangible connector elements is adapted to break at a predetermined shear force provided between said shoulder portion of the screw and said matching circular aperture of said plate member.

3. An indicator assembly according to any one of claims 1 and 2, wherein said at least two frangible connector elements protrude radially inward from said circular aperture towards said proximal end portion of said guide member.

4. An indicator assembly according to any one of claims 1 to 3, wherein said at least two connector elements are made from polymer.

5. An indicator assembly according to any one of claims 1 to 4, wherein said plate member is an annular disc arranged concentric with and substantially congruent with a flange portion (16) provided at the opening of the sheath, during use.

6. An indicator assembly according to any one of claims 1 to 5, wherein said plate member comprises a handle portion (113).

7. An indicator assembly according to any one of the preceding claims, wherein said guide member is adapted to couplingly slide in and irreversibly attach to the sheath at the opening.

8. An indicator assembly according to any one of the preceding claims, wherein said guide member comprises protrusions (139) adapted to couplingly engage with an interior structure (26) of the sheath.

9. An indicator assembly according to any one of the preceding claims, wherein said guide member and said indicator member are made from polymer.

10. An indicator assembly according to any one of the preceding claims, further comprising at least one resilient contact portion (127) protruding radially inwards from said distal end portion of said guide member and which is configured to guidingly engage with the screw during use.

11. An indicator assembly according to claim 10, wherein said at least one resilient contact portion comprises two diametrically opposed lugs (128) configured to operably mesh with the thread of the screw during use.

12. An indicator member according to any one of the preceding claims, wherein said indicator member is adapted to provide a visual contrast over the anchor.

13. An indicator member according to claim 12, wherein said visual contrast is provided by a predetermined shape and/or colour.

14. An anchor, comprising an indicator assembly according to any one of the preceding claims.

## Patentansprüche

1. Anzeigeanordnung (100) für einen Anker (10), Folgendes aufweisend:
ein Führungselement (101) mit einem distalen Endabschnitt (125), der mit einer Öffnung einer Hülse (12) des Ankers wirkverbunden werden kann, und einem proximalen Endabschnitt (123), der so ausgebildet ist, dass er eine Schraube (22), die in die Öffnung der Hülse eintritt, führend aufnimmt, wobei das Führungselement so angepasst ist, dass es die Schraube während der Verwendung mit einer Mittelachse (14) der Hülse zentriert;
ein Anzeigeelement (103), das brechbar mit dem proximalen Endabschnitt des Führungselements wirkverbunden und so ausgebildet ist, dass es mit einem Schulterabschnitt (34) der Schraube in Wirkungseingriff kommt, um sich bei einer vorbestimmten Kraft, die während der Verwendung durch den Schulterabschnitt der Schraube auf das Anzeigeelement bereitgestellt wird, physisch vom Führungselement zu lösen, wobei das Anzeigeelement ein Plattenelement (105) mit einer konzentrisch angeordneten kreisförmigen Öffnung (107) aufweist, die so ausgebildet ist, dass sie den Schulterabschnitt der Schraube während der Verwendung übereinstimmend aufnimmt, und wobei das Plattenelement mit dem proximalen Endabschnitt des Führungselements über zumindest zwei brechbare Verbinderelemente (119) wirkverbunden ist.

2. Anzeigeanordnung nach Anspruch 1, wobei eines der zumindest zwei brechbaren Verbinderelemente so angepasst ist, dass es bei einer vorbestimmten Scherkraft bricht, die zwischen dem Schulterabschnitt der Schraube und der entsprechenden kreisförmigen Öffnung des Plattenelements vorgesehen ist.

3. Anzeigeanordnung nach einem der Ansprüche 1 und 2, wobei die zumindest zwei brechbaren Verbinderelemente radial von der kreisförmigen Öffnung nach innen in Richtung des proximalen Endabschnitts des Führungselements vorstehen.

4. Anzeigeanordnung nach einem der Ansprüche 1 bis 3, wobei die zumindest zwei Verbinderelemente aus Polymer hergestellt sind.

5. Anzeigeanordnung nach einem der Ansprüche 1 bis 4, wobei das Plattenelement eine ringförmige Scheibe ist, die konzentrisch zu und im Wesentlichen kongruent mit einem Flanschabschnitt (16) angeordnet ist, der während der Verwendung an der Öffnung der Hülse vorgesehen ist.

6. Anzeigeanordnung nach einem der Ansprüche 1 bis 5, wobei das Plattenelement einen Griffabschnitt (113) aufweist.

7. Anzeigeanordnung nach einem der vorhergehenden Ansprüche, wobei das Führungselement so angepasst ist, dass es koppelnd an der Öffnung in die Hülse eingeschoben und irreversibel befestigt werden kann.

8. Anzeigeanordnung nach einem der vorhergehenden Ansprüche, wobei das Führungselement Vorsprünge (139) aufweist, die so angepasst sind, dass sie mit einer inneren Struktur (26) der Hülse koppelnd in Eingriff kommen.

9. Anzeigeanordnung nach einem der vorhergehenden Ansprüche, wobei das Führungselement und das Anzeigeelement aus Polymer hergestellt sind.

10. Anzeigeanordnung nach einem der vorhergehenden Ansprüche, ferner zumindest einen elastischen Kontaktabschnitt (127) aufweisend, der von dem distalen Endabschnitt des Führungselements radial nach innen vorsteht und so ausgebildet ist, dass er während der Verwendung führend mit der Schraube in Eingriff kommt.

11. Anzeigeanordnung nach Anspruch 10, wobei der zumindest eine elastische Kontaktabschnitt zwei diametral gegenüberliegende Nasen (128) aufweist, die so ausgebildet sind, dass sie während der Verwendung mit dem Gewinde der Schraube in Wirkverbindung stehen.

12. Anzeigeelement nach einem der vorhergehenden Ansprüche, wobei das Anzeigeelement so angepasst ist, dass es über dem Anker einen visuellen Kontrast vorsieht.

13. Anzeigeelement nach Anspruch 12, wobei der visuelle Kontrast durch eine vorbestimmte Form und/oder Farbe vorgesehen ist.

14. Anker, aufweisend eine Anzeigeanordnung nach einem der vorhergehenden Ansprüche.

## Revendications

1. Ensemble indicateur (100) pour une cheville (10), comprenant :
un organe de guidage (101), ayant une portion d'extrémité distale (125), pouvant être couplée de manière fonctionnelle à une ouverture d'une gaine (12) de l'ancrage, et une portion d'extrémité proximale (123), configurée pour recevoir de manière guidante une vis (22) pénétrant dans l'ouverture de la gaine, ledit organe de guidage étant adapté pour centrer la vis avec un axe central (14) de la gaine pendant l'utilisation ;
un organe indicateur (103), couplé de manière fonctionnelle et frangible à ladite portion d'extrémité proximale dudit organe de guidage, et configuré pour venir en prise de manière fonctionnelle avec une portion d'épaulement (34) de la vis, afin de se détacher physiquement dudit organe de guidage à une force prédéterminée fournie par la portion d'épaulement de la vis sur ledit organe indicateur pendant l'utilisation, dans lequel ledit organe indicateur comprend un organe de plaque (105) ayant un orifice circulaire (107) agencé de manière concentrique qui est configuré pour recevoir de manière concordante la portion d'épaulement de la vis, pendant l'utilisation, et dans lequel ledit organe de plaque est couplé de manière fonctionnelle à ladite portion d'extrémité proximale dudit organe de guidage par l'intermédiaire de l'au moins deux éléments de raccord frangibles (119).

2. Ensemble indicateur selon la revendication 1, dans lequel l'un quelconque desdits au moins deux éléments de raccord frangibles est adapté pour se rompre à une force de cisaillement prédéterminée fournie entre ladite portion d'épaulement de la vis et ledit orifice circulaire concordant dudit organe de plaque.

3. Ensemble indicateur selon l'une quelconque des revendications 1 et 2, dans lequel lesdits au moins deux éléments de raccord frangibles font saillie radialement vers l'intérieur depuis ledit orifice circulaire vers ladite portion d'extrémité proximale dudit organe de guidage.

4. Ensemble indicateur selon l'une quelconque des revendications 1 à 3, dans lequel lesdits au moins deux éléments de raccord sont composés de polymère.

5. Ensemble indicateur selon l'une quelconque des revendications 1 à 4, dans lequel ledit organe de plaque est un disque annulaire agencé de manière concentrique et sensiblement congruente avec une portion de bride (16) prévue au niveau de l'ouverture de la gaine, pendant l'utilisation.

6. Ensemble indicateur selon l'une quelconque des revendications 1 à 5, dans lequel ledit organe de plaque comprend une portion de poignée (113).

7. Ensemble indicateur selon l'une quelconque des revendications précédentes, dans lequel ledit organe de guidage est adapté pour coulisser de manière accouplée dans la gaine au niveau de l'ouverture et se fixer de manière irréversible à celle-ci.

8. Ensemble indicateur selon l'une quelconque des revendications précédentes, dans lequel ledit organe de guidage comprend des saillies (139) adaptées pour venir en prise de manière accouplée avec une structure intérieure (26) de la gaine.

9. Ensemble indicateur selon l'une quelconque des revendications précédentes, dans lequel ledit organe de guidage et ledit organe indicateur sont composés de polymère.

10. Ensemble indicateur selon l'une quelconque des revendications précédentes, comprenant en outre l'au moins une portion de contact élastique (127) faisant saillie radialement vers l'intérieur à partir de ladite portion d'extrémité distale dudit organe de guidage et qui est configurée pour venir en prise de manière guidante avec la vis pendant l'utilisation.

11. Ensemble indicateur selon la revendication 10, dans lequel ladite au moins une portion de contact élastique comprend deux pattes diamétralement opposées (128) configurées pour s'engrener de manière fonctionnelle avec le filetage de la vis pendant l'utilisation.

12. Organe indicateur selon l'une quelconque des revendications précédentes, dans lequel ledit organe indicateur est adapté pour fournir un contraste visuel sur la cheville.

13. Organe indicateur selon la revendication 12, dans lequel ledit contraste visuel est fourni par une forme et/ou une couleur prédéterminées.

14. Cheville, comprenant un ensemble indicateur selon l'une quelconque des revendications précédentes.
